Europäisches Patentamt

European Patent Office    (11) Publication number: **0 195 533**
**B1**
Office européen des brevets

(12)

# EUROPEAN PATENT SPECIFICATION

(45) Date of publication of the patent specification:    (51) Int. Cl.⁴: **F 16 D 55/14**
12.04.89

(21) Application number: **86301291.0**

(22) Date of filing: **24.02.86**

(54) Improvements in self-energising disc brakes.

(30) Priority: **09.03.85 GB 8506163**
**09.10.85 GB 8524855**

(43) Date of publication of application:
**24.09.86 Bulletin 86/39**

(45) Publication of the grant of the patent:
**12.04.89 Bulletin 89/15**

(84) Designated Contracting States:
**DE FR GB IT**

(56) References cited:
**EP-A- 0 040 027**
**EP-A- 0 108 591**
**DE-A- 2 640 304**
**GB-A- 1 147 892**
**GB-A- 2 014 261**
**US-A- 2 955 681**

(73) Proprietor: **LUCAS INDUSTRIES public limited company,**
**Great King Street, Birmingham, B19 2XF West Midlands**
**(GB)**

(72) Inventor: **Price, Anthony George, 14 Meadow Lane**
**Croesyceiliog Cwmbran, Gwent NP44 2EY Wales (GB)**
**Inventor: Campbell, Roy, The Corner House 1 Marlbrook**
**Lane, Licky Rock Bromsgrove Worcestershire (GB)**
**Inventor: Micke, Sigmar, Weidtmannstrasse 49,**
**D-5400 Koblenz Metternich (DE)**

(74) Representative: **Spall, Christopher John et al, BARKER,**
**BRETTELL & DUNCAN 138 Hagley Road, Edgbaston**
**Birmingham B16 9PW (GB)**

ACTORUM AG

## Description

This invention relates to self-energising disc brakes of the kind in which rotatable friction discs provided with linings of friction material are adapted to be brought into engagement with spaced opposed braking surfaces in a housing by pressure plates located between the friction discs and centred by stationary pilot lugs, balls or rollers are located in co-operating oppositely inclined recesses in the adjacent faces of the pressure plates, and the application of the brake is initiated by moving the pressure plates angularly in opposite directions, the pressure plates then moving apart, due to the tendency for the balls or rollers to ride up ramps defined by the edges of the recesses, and into engagement with the friction discs which are urged into engagement with the braking surfaces, and the pressure plates are carried round with the friction discs until one is arrested by the engagement of a lug on the plate with a drag-taking stop abutment in the housing, the continued angular movement of the other pressure plate providing a servo action, in which the brake is operated hydraulically for normal service braking by means of a hydraulic actuator which is located within the housing and acts between lugs, each extending radially from the peripheral edge of a respective one of the pressure plates, and the actuator comprises a cylinder body having a longitudinal bore in which works at least one piston having a direct operative engagement with an adjacent one of the lugs, the axis of the bore being tangential to the plates.

Self-energising brakes of the kind set forth may be dry or they may be of the liquid cooled type, and such brakes are commonly used in tractors and like vehicles and are hereinafter called brakes of the kind set forth (e. g. GB-A 2 014 261).

In a further known construction of the kind set forth, described in GB-A 1 147 892, the pressure plates are moved angularly in opposite directions by the hydraulic actuator which is located within the housing and the cylinder body has a longitudinal through bore of which the axis is tangential to the plates and in which work a pair of opposed pistons which act upon a pair of opposed lugs on the pressure plates through the intermediary of rocking dollies interposed between the pistons and the lugs. In such a known construction the axis of the bore also lies in a transverse plane parallel to the plane of each pressure plate. Thus substantially major proportions of the brake-applying forces applied to the plates are applied in the direction of the said plane.

We are aware of US-A 2 955 681 which discloses a disc brake having ball and ramp camming means to transfer angular movement of the pressure plate into axial movement of the plate. The pressure plate is urged angularly by an actuator assembly comprising a single piston working in a cylinder and acting indirectly on the lateral surface of the pressure plate through the intermediate of a thrust member. The axis of the actuator assembly is inclined to the plane of the pressure plate at the same angle as the ramps of the camming means.

According to our invention, in a self-energising disc brake of the kind set forth the line of action of the force from the piston to the respective lug lies in a plane which is angled with respect to a transverse plane parallel to the plane of each plate.

Angling the line of action of the force facilitates brake application and stability since the brake-applying force is applied to the plates with a radial component.

When the line of action of the force is angled in a direction which facilitates axial separation of the plates, the degree or extent of angling is matched to the inclination of the ramps defined by the edges of the recesses, thereby increasing efficiency, since a direct thrust is applied along the line of movement of the plates it may be necessary, in such a case, to control the tolerance of the pilot lugs within fine limits in order to ensure adequate stability of the brake. Hence an additional machining operation may be required.

When the line of action of the force acts in a direction to tend to urge the plates axially towards each other, stability is achieved with the usual tolerances of the pilot lugs and no additional machining operation is therefore necessary.

The angling of the line of action of the brake-applying force may be achieved by angling the axis of the longitudinal bore itself to lie in the said angled plane, or by angling the abutment face on the lug with which the piston co-operates.

The cylinder body may be fixed to the housing with a pair of opposed pistons working in the bore (in the body) which extends through the body, the pistons acting between the lugs.

In such a construction the body may be carried by, or intergral with, a mounting plate which is detachably mounted on the housing and forms a closure for a radial opening through which the cylinder body extends into the housing.

This facilitates and simplifies construction since the actuator can be removed from the brake and replaced simply by the removal from the brake and subsequent replacement of at least two securing bolts.

The mounting plate and the actuator may be combined with a mechanical mechanism for applying the brake manually for parking or in an emergency.

The mechanical mechanism, although so combined, may project into the housing through a second radial opening, spaced angularly from the first.

Preferably, however, the mechanical mechanism is actuated from the exterior of the housing by means which project into the brake with the hydraulic actuator, through a common radial opening. This facilitates machining on existing transfer lines, and allows more choice of a position in which the input forces are applied to the brake.

Some embodiments of our invention are illustrated in the accompanying drawings in which: —

Figure 1 is an end view of a portion of a spreading brake;

Figure 2 is a section on the line 2–2 of Figure 1;

Figure 3 is a section on the line 3–3 of Figure 1;

Figure 4 is a view similar to Figure 1 of a modified brake;

Figure 5 is a section on the line 5–5 of Figure 4;

Figure 6 is a view similar to Figure 2 but showing a modification; and

Figure 7 is a view similar to Figure 6 but showing yet another modification.

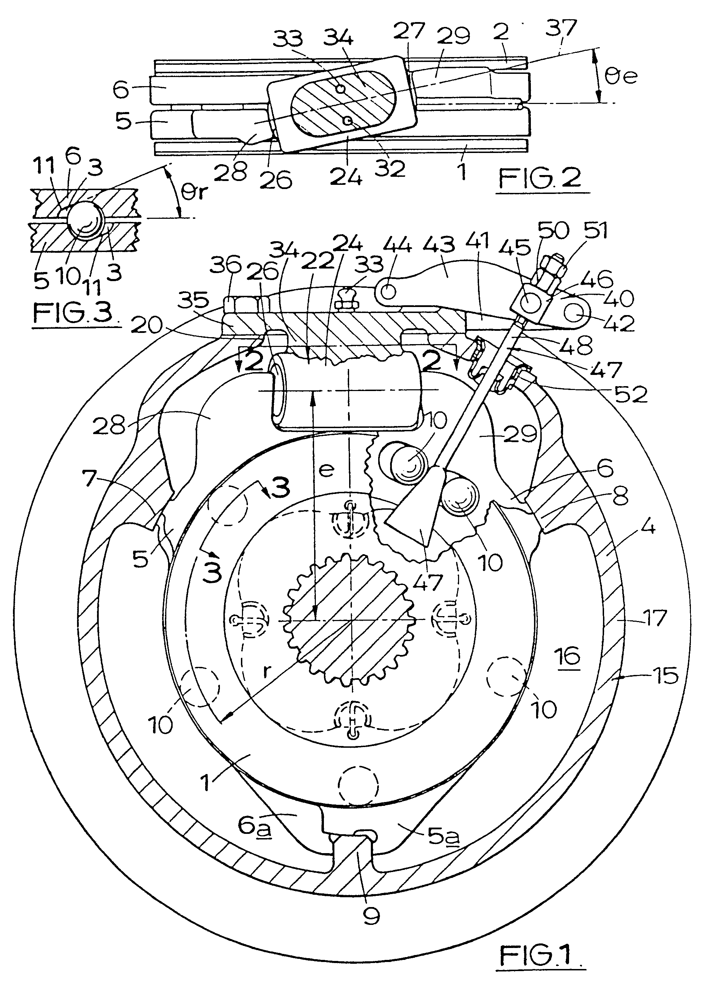

The brake illustrated in Figures 1–3 of the drawings is of a conventional spreading type in which two rotatable friction discs 1, 2 provided with friction linings and splined on a shaft are adapted to be brought into engagement with spaced opposed radial braking surfaces in a housing 4 by pressure plates 5, 6 located between the discs 1 and centred by three angularly spaced stationary pilots 7, 8, 9. Balls 10 are located in co-operating oppositely inclined recesses 3 in the adjacent faces of the pressure plates 5, 6.

The application of the brake is initiated by moving the pressure plates 5, 6 angularly in opposite directions which causes the pressure plates 5, 6 to move axially relatively away from each other due to the tendency for the balls 10 to ride up ramps 11 defined by the end faces of the recesses 3. This urges the friction discs 1, 2 into engagement with the braking surfaces in the housing 4. The pressure plates 5, 6 are then carried round with the discs until one is arrested by the engagement of a lug 5a, 6a on a respective plate 5, 6 with a drag-taking abutment constituted by the pilot 9, whereafter continued angular movement of the other plate, known as the «servo-plate», provides a servo action.

The housing 4 comprises a first member 15 in the form of a casting comprising an end wall 16 of which the inner face constitutes one of the radial braking surfaces, and an intergral, axially extending, annular flange 17 constituting a radial wall. The open face at the free end of the flange 17 is closed by an end plate, not shown, which is bolted to the member 15 by angularly spaced bolts.

A radial opening 20 in the flange 17 provides a mounting for an hydraulic actuator 22 by means of which the brake is adapted to be applied hydraulically.

As illustrated, the hydraulic actuator 22 comprises a cylinder 24 having an open-ended longitutinal through-bore in which work a pair of oppositely acting pistons 26, 27 for engagement with lugs 28 and 29 on the plates 5, 6. A pressure space defined in bore between adjacent inner ends of the pistons 26 and 27 is connected to a master cylinder through a passage 32, and a bleed passage 33 also leads from the pressure space.

The cylinder 24 is integral with the inner end of a spigot 34 which depends from a mounting plate 35. The plate 35 closes the opening 20 and is detachably secured to the flange 17 by at least two circumferentially spaced bolts 36.

The longitudinal axis 37 of the bore is tangential to the plates 5, 6, and also lies in a plane which is angled at an angle $\vartheta e$ with respect to a transverse plane parallel to the plane of each plate 5, 6. The angle $\theta e$ is related to the angle of inclination $\theta r$ of the ramp 11 of each recess.

If the angle of inclination of the axis 37 of the bore is $\theta e$, at nominal chordal centres 'e', and the ramp angle is $\theta r$ at radius 'r', then it follows that

$$\theta e = \tan^{-1} \frac{\tan \theta r \times r}{e}$$

The mounting plate 35 provides a mounting for a mechanical brake-applying mechanism 40 for applying the brake manually for parking or in an emergency. As illustrated the mounting plate 35 has a pair of axially spaced arms 41 which project from one end of the plate 35 and between the outer ends of which extends a pivot pin 42. A bifurcated lever 43 is pivotally mounted at its outer end on the pin 42 and at its opposite inner end has a connection 44 adapted to be coupled to a pull-rod or similar inextensible brake-applying member. A trunnion 45 is located at an intermediate point in the length of the lever 43, and the trunnion includes a block 46 which form a pivotal mounting for a wedge assembly 47. The wedge assembly 47 comprises a wedge 47 disposed between the balls 10 of an adjacent actuator pair, and a pull-rod 48 which carries the wedge 47 and extends through a radial opening 52 in the flange 17 and an opening in the block 46. The pull-rod 48 carries, in screw-threaded engagement at its outer end, an adjusting nut 50 which is in abutment with the block 46, and a block nut 51.

The radial opening 52 is spaced circumferentially from the opening 20, and is sealed by a sealing boot 53.

When the brake is applied hydraulically by the master cylinder, the pistons 26 and 27 move in opposite directions to urge the two lugs 28 and 29 relatively away from each other to initiate application of the brake. Due to the angle of inclination of the axis 37 of the cylinder 24, the input forces of the pistons 26 and 27 act in directions to move the pressure plates 5, 6 both angularly and axially.

When the brake is applied manually, a brake-applying force applied to the lever 43 moves the lever 43 angularly about the pivot pin 42 as an axis, to withdraw the wedge 47 in a radial direction and separate the balls 10 of the said actuator pair. Due to the engagement of the balls 10 in the recesses 3, the pressure plates 5 and 6 are caused to move angularly in opposite directions and initiate application of the brake, as described above.

The effective length of the pull-rod 48 can be adjusted to compensate for wear of the friction linings by adjusting the positions of the nuts 50, 51.

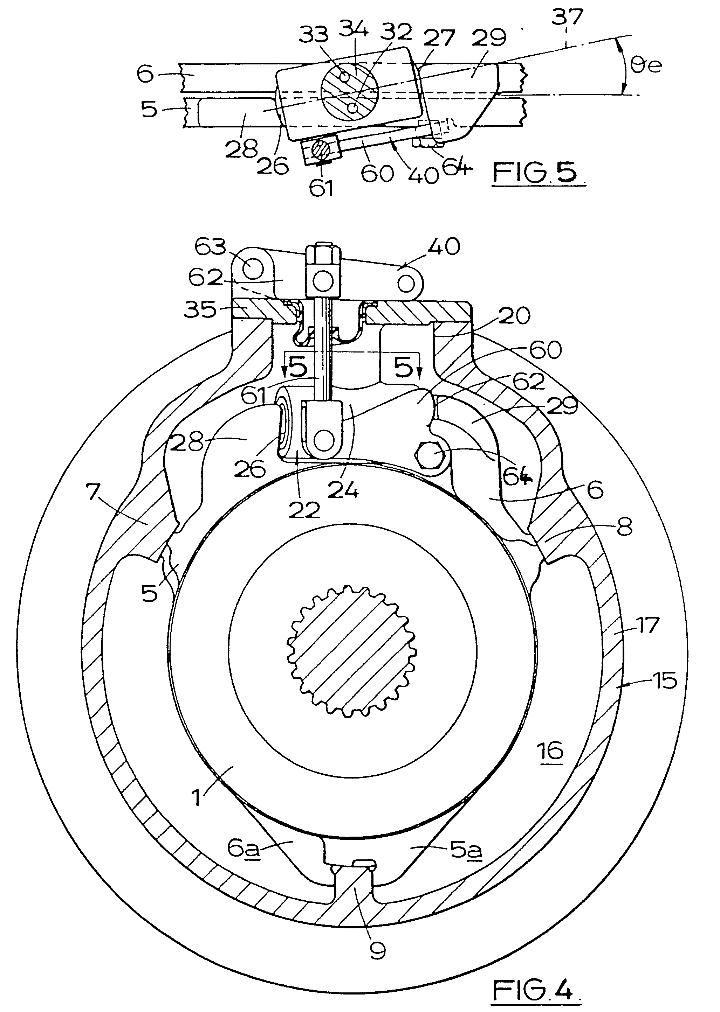

In the brake of Figures 4 and 5 the mechanical brake-applying mechanism 40 projects into the brake through the radial opening 20. In this construction the brake-applying mechanism 40 comprises a bell-crank lever 60 which is pivotally connected to the plate 5 by means of a pivot pin 61. The lever 60 has a partcircular nose 62 which co-operates with the lug 29 on the plate 6 which is extended axially across the plate 5. The lever 60 is adapted to be moved angularly about the pivot by means of a pull-rod 61 which, in turn, is coupled at its outer end to a lever 62. The lever 62 is pivotably mounted at one end on a pivotal connection 63 on the mounting plate 35 so that a brake-applying force applied to the opposite end is operative to withdraw the pull-rod 61 from the housing 4, at the same time moving the bell-crank lever 60 angularly, in turn to urge the two plates 5 and 6 angularly, relatively away from each other.

The bell-crank lever 60 is parallel to the axis 37 so that it is also angled at an angle of $\theta e$, and therefore applies input loads to the plates 5 and 6 in a similar direction and manner to that of the hydraulic actuator 22.

The pivot pin 64 has a stem of conical profile which is received in a circular opening in the bell-crank lever 60 in order to align the lever 60, and the pin 64 is screwed into a tapped hole in the plate 5 which is normal to the plane of that plate, to facilitate manufacture.

The construction and operation of the brake of Figures 4 and 5 is otherwise the same as that of Figures 1 to 3 and corresponding reference numerals have been applied to corresponding parts.

In the embodiments described above there may be a tendency for the component of the brake-applying force which acts in the direction to cause axial separation of the pressure plates 5 and 6 also to cause the plates 5, 6 to separate by a greater distance in the region of the actuator 22 than at a point diametrically opposite the actuator 22. During such an effect the forces acting on the balls 10 adjacent to the actuator 22 are reduced and the ball or balls 10 diametrically opposite the actuator 22 act as pivot points during the application of the brake, thus lifting the pressure plates 5, 6 relatively towards the actuator 22. In concequence the further the moment arm is away from the zero point of the angle, the greater will be the lift.

To compensate for this effect the tolerances between the pilot lugs 7 and 8 and the pressure plates 5 and 6 are chosen to bring the offset of the faces on the pressure plates 5 and 6, which co-operate with the lugs 7 and 8, to a zero value in an assembled condition. An additional machining operation may be necessary to achieve the necessary tolerances at the pilot faces.

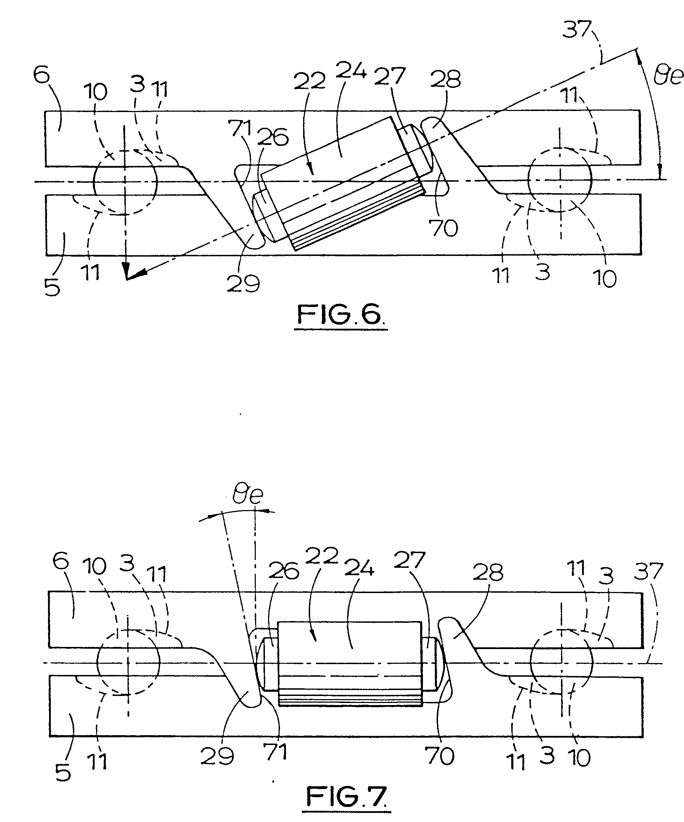

In the modified construction illustrated in Figure 6 of the accompanying drawings the arrangement of the lugs 28, 29 is reversed with the lugs being spaced circumferentially from each other in a relatively opposite direction and with the lugs 28, 29 projecting in a generally axial direction over the peripheral edge of the other plate. Abutment faces 70, 71 on the lugs 28, 29 and with which the pistons 27 and 26 respectively co-operate are generally normal to the axis 37 of the bore of the cylinder 24.

When the brake is applied, the axial component of the brake-applying force is applied by the pistons 26, 27 to the lugs 28, 29 in a direction so that at least the balls 10 adjacent to the actuator 22 are loaded onto the recesses 3. This ensures that those balls 10 closely follow the respective ramps 11.

The pivot point is transferred from the balls 10 diametrically opposite the actuator 22 to the balls 10 adjacent to the actuator 22. Even if an angle appears between the actuator 22 and relative to any pivot point on the balls 10, any tendency for the plates 5 and 6 to lift will be relatively small, and substantially one-third in comparison with the embodiment of Figures 1 to 3, and Figures 4 and 5, and the relative lift between the two plates 5 and 6 is substantially eliminated. Existing tolerances between the pilot lugs 7 and 8 and the pressure plates 5 and 6 can be maintained, and no additional machining operation will therefore be required to bring the offset of the pilot faces of the two pressure plates 5 and 6 to a zero value.

The construction and operation of the brake of Figure 6 is otherwise the same as the brakes of Figures 1 to 3 and Figures 4 and 5, and corresponding reference numerals have been applied to corresponding parts.

In the modified construction illustrated in Figure 7 of the accompanying drawings, the axis 37 of the bore of the cylinder 24 is parallel to the plane of the plates, and the abutment faces 70, 71 on the respective lugs 28 and 29 are parallel to each other and are inclined at the angle $\theta e$ to a normal to the axis 37.

Thus, as in the modification of Figure 6, when the brake is applied at least the balls 10 adjacent to the actuator 22 are loaded onto the recesses 3, and the same effect is achieved as with the arrangement of Figure 6.

## Claims

1. A self-energising disc brake in which rotatable friction discs (1, 2) provided with linings of friction material are adapted to be brought into engagement with spaced opposed braking surfaces in a housing (4) by pressure plates (5, 6) located between the friction discs and centred by stationary pilot lugs (7, 8, 9), balls or rollers (10) are located in co-operating oppositely inclined recesses (3) in the adjacent faces of the pressure plates, and the application of the brake is initiated by moving the pressure plates angularly in opposite directions, the pressure plates then moving apart, due to the tendency for the balls or rollers to ride up ramps (11) defined by the edges of the recesses, and into engagement with the friction discs which are urged into engagement with the braking surfaces, and the pressure plates are carried round with the friction discs until one is arrested by the engagement of a lug (5a, 6a) on the plate with a drag-taking stop abutment (9) in the housing, the continued angular movement of the other pressure plate providing a servo action, in which the brake is operated hydraulically for normal service braking by means of a hydraulic actuator (22) which is located within the housing (4) and acts between lugs (28, 29), each extending radially from the periphery of a respective one of the pressure plates, and the actuator comprises a cylinder body (24) having a longitudinal bore in which works at least one piston (26, 27) having a direct operative engagement with an adjacent one of the lugs, the axis of the bore being tangential to the plates (5, 6) characterised in that the line of action of the force from the piston (26, 27) to the respective lug (28, 29) lying in a plane which is angled with respect to a transverse plane parallel to the plane of each plate.

2. A brake according to Claim 1, characterised in that the line of action of the force is angled in a direction which facilitates axial separation of the plates (5, 6), and the extent of such angling is matched to the inclination of the ramps (11).

3. A brake according to Claim 2, characterised in that

$$\theta e = \tan^{-1} \frac{\tan \theta r \times r}{e}$$

where $\theta e$ is the angle of inclination of line of action of the force at nominal chordal centres 'e'; and $\theta r$ is the angle of the ramp (11) at radius 'r'.

4. A brake according to Claim 1, characterised in that the line of action of the force is angled in a direction to tend to urge the plates (5, 6) axially towards each other.

5. A brake according to any preceding claims, characterised in that the angling of the line of action of the brake-applying force is achieved by angling the axis (37) of the longitudinal bore itself to lie in the said angled plane.

6. A brake according to any of Claims 1 to 4, characterised in that the angling of the line of action of the brake-applying force is achieved by angling the abutment face (70, 71) on the lug (28, 29) with which the piston (26, 27) co-operates.

7. A brake according to any preceding claims, characterised in that a pair of opposed pistons (26, 27) work in the bore which extends through the cylinder body (24), and the pistons co-operate with the lugs (28, 29).

8. A brake according to any preceding claims, characterised in that the cylinder body (24) is carried from a mounting plate (35) which is detachably mounted on the housing (4) and forms a closure for a radial opening (20) through which the cylinder body (24) extends into the housing.

9. A brake according to any preceding claims, characterised in that the mounting plate (35) and the hydraulic actuator (22) are combined with a mechanical brake-applying mechanism (40).

10. A brake according to Claim 9, characterised in that the mechanical brake-applying mechanism (40) projects into the housing (4) through a second opening (52) spaced angularly from the opening (20) through which the cylinder body (24) extends into the brake.

11. A brake according to Claim 9, characterised in that the mechanical brake-applying mechanism (40) is adapted to be actuated by means (61) which project into the brake through the opening (20) through which the cylinder body (24) extends into the brake.

**Patentansprüche**

1. Selbstverstärkende Scheibenbremse, bei welcher drehbare Reibungsscheiben (1, 2), welche mit Beschichtungen eines Reibungsmaterials versehen sind, in Eingriff mit beabstandeten, gegenüberliegenden Bremsflächen in einem Gehäuse (4) über Druckplatten (5, 6) bringbar sind, welche zwischen den Reibscheiben angeordnet sind und durch stationäre Führungsansätze (7, 8, 9) zentriert sind, wobei Kugeln oder Walzen (10) in zusammenwirkenden, entgegengesetzt geneigten Ausnehmungen (3) in den benachbarten Flächen der Druckplatten angeordnet sind und wobei die Betätigung der Bremse durch eine Winkelbewegung der Druckplatten in gegenüberliegende Richtungen eingeleitet wird, wobei die Druckplatten sich voneinander wegbewegen, und zwar wegen der Bestrebung der Kugeln oder Walzen, sich entlang Rampen (11) hinaufzubewegen, welche durch die Kanten der Ausnehmungen gebildet werden, und in Eingriff mit den Reibungsscheiben, welche in Eingriff mit den Bremsflächen gedrückt werden, und wobei die Druckplatten mit den Reibungsscheiben herumgetragen werden, bis ein Teil durch den Eingriff eines Ansatzes (5a, 6a) an der Platte mit einem ein Mitschleppen aufnehmenden Anschlag-Widerlager (9) in dem Gehäuse aufgenommen wird, wobei die weitere Winkelbewegung der anderen Druckplatte eine Servowirkung hervorruft, bei welcher die Bremse hydraulisch zum normalen Bremsen mittels einer hydraulischen Betätigung (22) betätigt wird, welche in dem Gehäuse (4) angeordnet ist und zwischen Ansätzen (28, 29) wirkt, welche sich jeweils radial von dem Umfang jeweils einer der Druckplatten erstreckt, und wobei die Betätigung einen zylindrischen Körper (24) umfaßt, welcher eine Längsbohrung aufweist, in welcher zumindest ein Kolben (26, 27) arbeitet, welcher sich in einem direkten Betriebseingriff mit einem benachbarten Ansatz befindet, wobei die Achse der Bohrung tangential zu den Platten (5, 6) angeordnet ist, dadurch gekennzeichnet, daß die Wirkungslinie der Kraft von dem Kolben (26, 27) zu dem jeweiligen Ansatz (28, 29) in einer Ebene liegt, welche bezüglich einer Querebene parallel zu der Ebene jeder Platte in einem Winkel angeordnet ist.

2. Bremse nach Anspruch 1, dadurch gekennzeichnet, daß die Wirkungslinie der Kraft in einem Winkel geneigt ist, welcher eine axiale Trennung der Platten (5, 6) erleichtert, und daß der Betrag dieser Winkelstellung zu der Neigung der Rampen (11) paßt.

3. Bremse nach Anspruch 2, dadurch gekennzeichnet, daß

$$\theta e = \tan^{-1} \frac{\tan \theta r \times 6}{e}$$

wobei $\theta e$ der Neigungswinkel der Wirkungslinie der Kraft bei nominellen Sehnenzentren "e" ist und wobei $\theta r$ der Winkel der Rampe (11) bei dem Radius "r" ist.

4. Bremse nach Anspruch 1, dadurch gekennzeichnet, daß die Wirkungslinie der Kraft in einer Richtung winkelmäßig geneigt ist, um dazu zu führen, die Platten (5, 6) axial aufeinander zuzudrücken.

5. Bremse nach einem der vorhergehenden Ansprüche, dadurch gekennzeichnet, daß die Winkelstellung der Wirkungslinie der Bremsbetätigungskraft durch eine Winkelstellung der Achse (37) der Längsbohrung selbst erzielt wird, um der im Winkel geneigten Ebene zugeordnet zu sein.

6. Bremse nach einem der Ansprüche 1 bis 4, dadurch gekennzeichnet, daß die Winkelstellung der Wirkungslinie der Bremsbetätigungskraft durch eine Winkelstellung der Widerlagerfläche (70, 71) an dem Ansatz (28, 29), mit welchem der Kolben (26, 27) zusammenwirkt, erzielt wird.

7. Bremse nach einem der vorhergehenden Ansprüche, dadurch gekennzeichnet, daß ein Paar von gegenüberliegenden Kolben (26, 27) in der Bohrung arbeiten, welche sich durch den Zylinderkörper (24) erstreckt, und daß die Kolben mit den Ansätzen (28, 29) zusammenarbeiten.

8. Bremse nach einem der vorhergehenden Ansprüche, dadurch gekennzeichnet, daß der Zylinderkörper (24) von einer Lagerplatte (35) getragen wird, welche entfernbar an dem Gehäuse gelagert ist und einen Verschluß für eine radiale Öffnung (20) bildet, durch welche der Zylinderkörper (24) sich in das Gehäuse erstreckt.

9. Bremse nach einem der vorhergehenden Ansprüche, dadurch gekennzeichnet, daß die Lagerplatte (35) und die hydraulische Betätigung (22) mit einem mechanischen Bremsbetätigungsmechanismus (40) kombiniert sind.

10. Bremse nach Anspruch 9, dadurch gekennzeichnet, daß der mechanische Bremsbetätigungsmechanismus (40) sich in das Gehäuse (4) durch eine zweite Öffnung (52) erstreckt, welche in einem Winkel von der Öffnung (20) beabstandet ist, durch welche sich der Zylinderkörper (24) in die Bremse erstreckt.

11. Bremse nach Anspruch 9, dadurch gekennzeichnet, daß der mechanische Bremsbetätigungsmechanismus (40) dazu geeignet ist, mittels einer Einrichtung (61) betätigt zu werden, welche sich durch die Öffnung (20), durch welche sich der Zylinderkörper (24) in die Bremse erstreckt, in die Bremse hineinragt.

**Revendications**

1. Frein à disque à auto-serrage, dans lequel des disques de frottement rotatifs (1, 2) comportant des garnitures formées par un matériau de friction peuvent être amenés en contact avec des surfaces de freinage espacées, situées en vis-à-vis, dans un boîtier (4) sous l'action de plateaux de pression (5, 6) situés entre les disques de friction et centrés par des parties saillantes fixes de guidage (7, 8, 9), des billes ou des galets (10) sont situés dans des renfoncements (3) inclinés en sens opposé, coopérant avec les parties saillantes et ménagés dans les faces adjacentes des plateaux de pression, et le serrage du frein est initié sous l'effet d'un déplacement angulaire des plateaux de pression dans des sens opposés, les plateaux de pression s'écartant alors sous l'effet de la tendance des billes ou des galets à monter sur des rampes (11) définies par les bords des renfoncements, et venant en contact avec les disques de friction qui sont repoussés en contact avec les surfaces de freinage, et les plateaux de pression sont entraînés en rotation conjointement avec les disques de friction jusqu'à ce que l'un d'eux soit bloqué par suite de la venue d'une patte (5a, 6a) située sur le plateau en contact avec une butée d'arrêt (9) de résistance située dans le boîtier, la poursuite du déplacement angulaire de l'autre plateau de pression produisant une action d'asservissement, lors de laquelle le frein est actionné hydrauliquement, pour réaliser un freinage de service normal, par l'intermédiaire d'un actionneur hydraulique (22) qui est situé dans le boîtier (4) et agit entre des bossages (28, 29) dont chacun s'étend radialement à partir du bord périphérique d'un plateau respectif faisant partie des plateaux de pression, et l'actionneur comprend un corps formant cylindre (20) possédant un perçage longitudinal dans lequel travaille au moins un piston (26, 27) en liaison fonctionnelle directe avec l'un des bossages, qui est voisin, l'axe du perçage étant tangentiel aux plateaux (5, 6), caractérisé en ce que la ligne d'action de la force partant du piston (26, 27) et aboutissant aux bossages respectifs (28, 29) est située dans un plan qui est incliné par rapport à un plan transversal parallèle au plan de chaque plateau.

2. Frein selon la revendication 1, caractérisé en ce que la ligne d'action de la force est inclinée dans un sens qui facilite la séparation axiale des plateaux (5, 6) et la valeur de cette inclinaison est adaptée à l'inclinaison des rampes (11).

3. Frein selon la revendication 2, caractérisé en ce que

$$\theta e = tg^{-1} \frac{tg\ \theta r \times r}{e}$$

θe désignant l'angle d'inclinaison de la ligne d'action de la force pour une distance nominale "e" du centre à la corde; et θr désignant l'angle de la rampe (11) pour le rayon "r".

4. Frein selon la revendication 1, caractérisé en ce que la ligne d'action de la force est inclinée dans un sens tel que ceci tendre à repousser les plateaux (5, 6) axialement l'un vers l'autre.

5. Frein selon l'une quelconque des revendications précédentes, caractérisé en ce que l'inclinaison de la ligne d'action de la force de serrage du frein est obtenue grâce à une inclinaison de l'axe (37) du perçage longitudinal lui-même de manière qu'il se situe dans ledit plan incliné.

6. Frein selon l'une quelconque des revendications 1 à 4, caractérisé en ce que l'inclinaison de la ligne d'action de la force de serrage du frein est obtenue au moyen d'une inclinaison de la face de butée (70, 71) située sur le bossage (28, 29), avec lequel le piston (26, 27) coopère.

7. Frein selon l'une quelconque des revendications précédentes, caractérisé en ce qu'un couple de pistons opposés (26, 27) travaille dans le perçage qui s'étend à travers le corps cylindrique (24), et que les pistons coopèrent avec les bossages (28, 29).

8. Frein selon l'une quelconque des revendications précédentes, caractérisé en ce que le corps formant cylindre (14) est porté par une plaque de support (35) qui est montée de façon amovible sur le boîtier (4) et forme un dispositif de fermeture pour une ouverture radiale (20), à travers laquelle le corps cylindrique (24) pénètre dans le boîtier.

9. Frein selon l'une quelconque des revendications précédentes, caractérisé en ce que la plaque de montage (35) et l'actionneur hydraulique (22) sont combinés à un mécanisme (40) de serrage du frein.

10. Frein selon la revendication 9, caractérisé en ce que le mécanisme (40) de serrage du frein pénètre à l'intérieur du boîtier (4) à travers une seconde ouverture (52) espacée angulairement par rapport à l'ouverture (20), à travers laquelle le corps formant cylindre (24) pénètre dans le frein.

11. Frein selon la revendication 9, caractérisé en ce que le mécanisme (40) de serrage du frein est adapté de manière à être actionné par des moyens (61), qui pénètrent à l'intérieur du frein à travers l'ouverture (20), à travers laquelle le corps cylindrique (24) pénètre à l'intérieur du frein.

EP 0195533 B1

FIG.2

FIG.3

FIG.1

FIG.5.

FIG.4.

FIG.6.

FIG.7.